# EUROPEAN PATENT APPLICATION

(11) **EP 2 848 763 A1**
(43) Date of publication of application: **18.03.2015**
(21) Application number: 13306247.1
(22) Date of filing: 11.09.2013
(51) Int. Cl.: E21B 33/035

(54) **Controlling a power supply at a subsea node**

(71) Applicant: ALCATEL LUCENT, 92100 Boulogne-Billancourt (FR); Statoil Petroleum AS, 4035 Stavanger (NO)
(72) Inventor: Verhaege, Thierry, 91160 Saulx-les-Chartreux (FR); Vareille, Ghislaine, 91470 Limours (FR); Jaouen, Mélanie, 78114 Magny-les-Hameaux (FR); Egger, Jean-Henri, 92190 Meudon (FR); Marcerou, Jean-François, 78730 Rochefort-en-Yvelines (FR); Midttveit, Steinar, 5179 Godvik (NO)
(74) Representative: White, Duncan Rohan

(57) **Abstract**

A system comprising a power supply, a controller and a subsea node that is identifiable by an identifier. The controller is configured to transmit a command signal to switch power at the subsea node using the identifier corresponding to the subsea node. This allows power to an individual subsea node to be switched on or off without affecting power to other subsea nodes. This is particularly useful where the system comprises a plurality of subsea nodes, each node of the plurality of subsea nodes being identifiable by a unique identifier.

## Description

### TECHNICAL FIELD

The invention relates to the field of switching in a subsea power network and controlling a power supply at a subsea node.

### BACKGROUND

In subsea hydrocarbon production systems, a host production facility such as shore based production facility or an offshore platform is typically connected to one or more subsea wells. Production pipelines connect each subsea well to the host production facility. Production pipelines are used for conveying extracted hydrocarbons back to the host production facility. In addition to the production pipelines, it may be necessary to provide each subsea well with certain services. These may include electric power, data transfer, hydraulic fluids and wellstream service fluids, such as chemical additives. These four services are normally provided in one or more subsea umbilicals.

Each subsea well typically has a subsea Christmas tree; a collection of valves and other fittings to control the flow out of the well and to control the injection of process fluids into the well. Christmas trees typically provide other functions, such as pressure relief, well intervention, acting as a point to connect other devices such as monitoring equipment.

In known system, electrical power from the host production facility is provided to each Christmas tree (or other subsea structure) individually. If it is required to shut down a Christmas tree, then power can be removed directly from it.

### SUMMARY

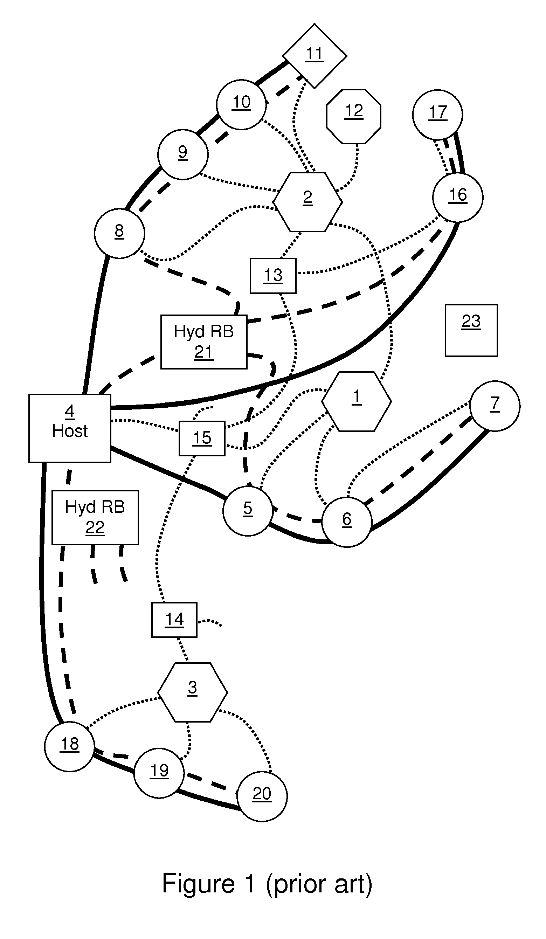

Recently, some suggestions have been made to provide a subsea power network that can service many different subsea nodes. For example, WO 2011/147459 describes a system in which an electric power and data network is provided for conveying electrical power and data to a plurality of subsea nodes. This is illustrated in Figure 1, in which three hubs 1, 2, 3 are illustrated that can provide data and electrical power to various subsea nodes. A host platform 4 provides power to the hubs 1, 2, 3. In the example of Figure 1, hub 1 provides data and electrical power to subsea wells 5, 6, 7 and is further connected to hub 2. Hub 2 provides electrical power and data to subsea wells 8, 9 and 10, and also provides electrical power and data services to subsea processing unit 11 and subsea environmental observatory 12.

In the example of Figure 1, branching units 13, 14, 15 are also provided. A branching unit is effectively a cable splitter where a power cable is input and two or more power cables are output. The advantage of using branching units is that in the event of a fault or failure, individual portions of the electrical power/data network can be isolated without affecting the rest of the electrical power/data network. Further subsea wells are illustrated 16, 17, 18, 19, 20.

For the fluid conveying network, hydraulic riser bases 21, 22 may be provided, and marginal prospects 23 may also be eventually connected to the electrical power/data network to further develop or evaluate them.

The fluid conduit network, illustrated by darker lines, is completely separate from the electrical power and data network (illustrated by the dotted lines).

The sort of subsea network described above allows for more efficient provision of power and data over a large subsea area. However, if an individual subsea node needs shutting down there is no way to shut down power to that node without shutting down power to many other nodes in line. Consider the case where it is required to shut down the power to a subsea well 5. In this case, the only way to do so would be to, at the host 4, shut down the power to hub 1. This would lead to power being shut down for subsea wells 6, 7 in addition to subsea hub 1. This leads to an unacceptable loss of production not only from well 5 but in addition from 6, 7 and from hub 2 if hub 2 is connected to hub 1. This would lead to loss of production from all wells which are connected to hub 2, that is from wells 8, 9 and 10.

According to a first aspect, there is provided a system comprising a power supply, a controller and a subsea node that is identifiable by an identifier. The controller is configured to transmit a command signal to switch power at the subsea node using the identifier corresponding to the subsea node. This allows power to an individual subsea node to be switched on or off without affecting power to other subsea nodes.

As an option, the system comprises a plurality of subsea nodes, each node of the plurality of subsea nodes being identifiable by a unique identifier. A power network provides power from the power supply to each node of the plurality of subsea nodes. A separate communications network connects each subsea node to a controller. Each subsea node is provided with a switching mechanism arranged to switch power at the node, the switching mechanism being controllable by a signal sent from the controller in order to remotely switch power at the node.

The power supply and the controller are optionally located at a surface location.

The controller is optionally configured to send the signal to the subsea node by any of a fibre optic cable, an electrical cable, power line communications and a radio signal.

As an option, at least one of the subsea nodes has a plurality of switchable power outputs, each switchable power output being associated with a unique output identifier.

The system is optionally configured to send the signal by a fibre optic cable and also by a further carrier medium, the further carrier medium comprising any of a further fibre optic cable, an electrical cable, power line communications and a radio signal. As a further option, the subsea node is arranged to take action on the basis of the signal received from either of the fibre optic cable and/or the further carrier medium. This builds some redundancy into the system.

The system is optionally configured to repeat the signal periodically and the subsea node is arranged to switch power at the subsea node in response to an absence of the signal for a predetermined time period.

The signal optionally comprises a header portion comprising at least the identifier associated with the subsea node and a payload portion comprising at least an instruction relating to switching the supply of power at the subsea node.

As an option, the system is configured to send the signal from the controller to the subsea node by a fibre optic cable, and the unique identifier relates to a signalling wavelength, the system being further configured for, at the subsea node, maintaining electrical power in the event that the subsea node detects signalling at the signalling wavelength, and switching off electrical power in the event that the subsea node does not detect signalling at the signalling wavelength.

According to a second aspect, there is provided a subsea node comprising a power input for receiving electrical power, a switch for switching electrical power on or off, a receiver for receiving a signal, the signal identifying the subsea node, and a processor for activating the switch on the basis of the received signal.

The receiver is optionally arranged to receive a signal sent using any of a fibre optic cable, an electrical cable, power line communications and a radio signal.

The subsea node optionally comprises a plurality of power outputs, each power output having a corresponding power switch, each power output being associated with a unique identifier.

The subsea node optionally comprises a further receiver, the further receiver arranged to receive a signal sent over a further carrier medium, the further carrier medium being selected from any of a further fibre optic cable, an electrical cable, power line communications and a radio signal.

The subsea node is optionally arranged to take action on the basis of the signal received from of the receiver and/or the further receiver.

As an option, the processor is arranged to maintain power at the subsea node and to switch off the power if the signal has not been received for a predetermined time period.

The receiver is optionally arranged to receive a signal comprising a header portion comprising at least the identifier associated with the subsea node and a payload portion comprising at least an instruction relating to switching the power supply at the subsea node.

As an option, the receiver is arranged to receive a signal carried by an optical fibre at a signalling wavelength associated with the subsea node, the signalling wavelength identifying the subsea node, and the processor is arranged to maintain electrical power in the event that the subsea node detects signalling at the signalling wavelength, and switch off electrical power in the event that the subsea node does not detect signalling at the signalling wavelength.

According to a third aspect, there is provided a subsea node configured for receiving power from a power supply, receiving a command signal from a controller comprising an identifier corresponding to said subsea node, and switching power on the basis of said identifier.

According to a fourth aspect, there is provided a computer device for controlling electrical power at a subsea node. The computer device is provided with a database comprising a plurality of identifiers, each identifier of the plurality of identifiers being associated with a respective subsea node. An interface is provided for allowing an operator to specify a subsea node and a switching operation for the subsea node. A transmitter is also provided for sending a signal, the signal identifying the subsea node and including an instruction instructing the subsea node on maintaining or switching a power supply at the subsea node.

The computer device optionally comprises a processor for automatically sending the signal without requiring intervention from the operator.

As an option, the database further comprises a plurality of unique identifiers, each corresponding to output at a subsea node.

The transmitter may be arranged to send the signal using any of a fibre optic cable, an electrical cable, power line communications and a radio signal.

The computer device optionally comprises a further transmitter, the further transmitter being arranged to send the signal by a further carrier medium, the further carrier medium comprising any of a further fibre optic cable, an electrical cable, power line communications and a radio signal.

The transmitter is optionally arranged to send the signal periodically such that the subsea node maintains electrical power or stop sending said signal for predetermined period of time such that the subsea node switches off.

The transmitter is optionally arranged to send a signal comprising a header portion comprising at least the identifier associated with the subsea node and a payload portion comprising at least an instruction relating to switching the power supply at the subsea node.

As an option, each identifier is associated with a wavelength, the transmitter being arranged to send a signal at that wavelength over a fibre optic cable.

### BRIEF DESCRIPTION OF DRAWINGS

Figure 1 illustrates schematically in a block diagram a subsea electrical power/data network and a separate fluid conveying network;
Figure 2 illustrates schematically in a block diagram an exemplary electrical power and data network;
Figure 3 illustrates schematically an exemplary network architecture showing signalling redundancy options;
Figure 4 illustrates schematically in a block diagram an exemplary subsea node;
Figure 5 illustrates schematically in a block diagram an exemplary computer device; and
Figure 6 is a flow diagram illustrating an embodiment in which a controller sends a keep-alive signal.

### DETAILED DESCRIPTION

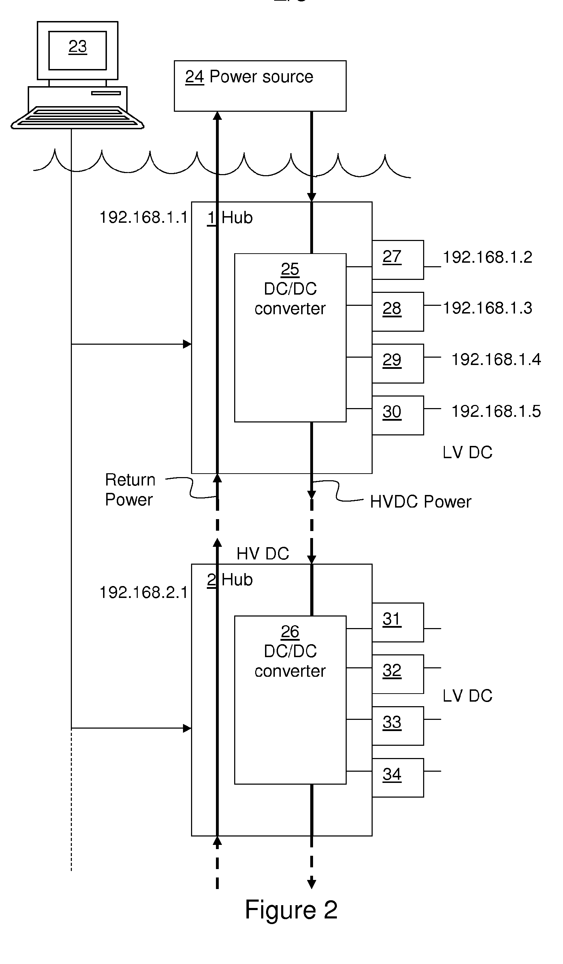

Turning to Figure 2, there is illustrated a controller computer 23 operable by a user at the host facility that supplies power to the subsea network. A power source 24 may be located at the host facility, or at any convenient location and provides power to the subsea network. The power supply 24 is connected to the subsea power network via electrical cables, and the controller computer 23 is connected to the subsea nodes by any suitable data cables, such as electric cables or fibre optic cables. The power and data cables may be provided in a single connector cable, although it is possible for separate power and data networks using separate cables to be installed. In an optional embodiment, the data signal may be carried on the power supply using known power line communications techniques. The description below assumes the example of the power and data being provided in a single cable, with the data being carried using fibre optic signals.

In the example of Figure 2, two hubs 1, 2 are shown. Each hub 1, 2 is provisioned with an identifier, and the identifiers, or information relative thereto may be stored at the controller computer 23. Identifiers may have any suitable form. In some embodiments, the identifier may have a structure similar to an IP address structure. For example hub 1 may be provided with an identifier, such as 192.168.1.1, and hub 2 with an identifier such as 192.168.2.1. Instructions relating to the provision of the power supply and also to operation of the hub can be provided via the fibre optic cables to each hub 1, 2 by identifying each hub using their identifier. If a hub 1 receives a signal over the fibre optic cable that identifies that hub 1, then it can act on an instruction contained in that signal. The signal includes an identifier that identifies the associated hub 1. In this way, if hub 1 receives an instruction in a signal from the controller computer 23 to shut down power, it can shut down power without the need for other hubs 2, 3, services by the same power source 24 to also shut down.

The technique can be further refined to shut down power to individual subsea nodes served by a hub 1. In the example of Figure 2, hub 1 has a DC/DC converter 25 (and hub 2 has a similar converter 26). The converter is provided to receive high voltage DC power from the power source 24 and convert it to a low voltage DC power that is usable by each subsea node 5, 6, 7. The DC/DC converter 25 of hub 1 has four low voltage outputs 27, 28, 29, 30. Each low voltage output 27, 28, 29, 30 is identified by a unique identifier (in this case, 192.168.1.2, 192.168.1.3, 192.168.1.4 and 192.168.1.5). The low voltage output identifiers may use a "tree structure" in that the root of each identifier is based on the identifier for the hub 1, although it will be appreciated that each low voltage output may be assigned an identifier that is not related to the hub 1 or the other low voltage outputs. Note that the term "unique" in this context means that the identifier is unique to the data network.

The hub 1 is essentially acting as a local area network (LAN) for communication with other nodes. Note that other nodes may be complete nodes such as a Christmas tree, or individual outputs on a single node.

Each low voltage DC (LVDC) output is provided with a switch that is controlled by the signal received. For example, hub 1 may receive a signal from controller computer 23 to shut down LVDC output 28, in which case the signal is addressed using the identifier for LVDC output 28 (192.168.1.3).

While each hub is shown as having four LVDC outputs, this is by way of example only and it will be appreciated that it may be provided with more outputs. Note also that a subsea node 5 served by a hub 1 may also have different outputs, and it is possible to assign unique identifiers to each of those different outputs to further control switching of power in the subsea network. The only requirement is that each power output that must be switched on or off can be uniquely identified within the network by an identifier. In this way, the operator of the controller computer 23 can use the addressing system to identify different subsea nodes in order to control power, and also to identify different outputs at an individual identified subsea node. This can be done without needing to shut down power to the entire network, and so any loss of production when a node must be shut down for maintenance or in an emergency situation is minimised.

In an embodiment in which the data cable is a fibre optic (FO) cable, there are different options for sending signals. In one embodiment, a coded message is sent in a time modulated signal. The coded message may have the same structure as an IP packet. For example, it may include a header that includes metadata, such as an identifier of the subsea node or output, a time, a return address and so in. It need not include any payload data. For example, the signal could be set at pre-determined time intervals, and are understood by the subsea node (or individual outputs) to be a "keep-alive" signal. In other words, as long as the subsea node receives a keep-alive signal addressed to that subsea node, it maintains electrical power. However, if the subsea node stops receiving the keep-alive signal it will switch off electrical power.

Once power has been shut off owing to the loss of a keep-alive signal for that subsea node 1, the electrical power to the subsea node 1 can be re-activated simply by resuming transmission of the keep-alive signal. When the subsea node 1 receives a keep-alive signal it switches power from "off" to "on".

It is preferred, although not mandatory, to have the absence of the keep-alive signal leading to a shut down of electrical power rather than an activation of electrical power. If the subsea node and data system were designed in such a way that failure to receive a keep-alive signal leads to activation of the electrical power, then a failure in the data network (for example an FO cable break) could lead to power being inadvertently turning on. However, it will be appreciated that power could also be shut down when a positive signal to shut down the power is received.

In an alternative embodiment, the data signal may include payload data. Payload data may take the form of an instruction (for example, turn off electrical power, turn on electrical power, turn off electrical power at output 3 and so on). If payload data includes specific instructions, then subsea nodes can be uniquely identified by an identifier, and the payload instructions can be used to provide instructions to specific outputs of the subsea nodes.

A disadvantage of this technique is that in the event of a failure in the data network (for example, a break in an FO cable), an instruction to turn off power would not be received. This would mean that a subsea node could not be instructed to turn electrical power off (either for the whole node or for specific outputs). This is not desirable, especially in an emergency situation. It is therefore preferred to maintain electrical power at the subsea node (or an output) by using a keep-alive signal as described above.

Note that the above description uses an identifier in a similar manner to an IP address to identify a subsea node or a specific output of the subsea node. However, there are many different types of identifiers that may be used to identify a subsea node or an output of a subsea node, which may necessitate particular requirements for the signalling.

For example, if the data cable is a fibre optic (FO) cable, it is capable of carrying an optical signal at particular wavelengths. In an embodiment of the invention that is otherwise compatible with the embodiment described above, each subsea node or subsea node output is uniquely (within the data network) associated with a particular wavelength. The subsea node need then only detect the presence or absence of a particular wavelength of signal; no other information need be carried by the signal. For example, if the subsea node detects the presence of a given wavelength of light, it maintains its electrical power. If the signal at that particular wavelength is no longer detected, then the subsea node switches electrical power off.

Note that a specific wavelength may be assigned to an individual output of a subsea node. Note also that subsea nodes and outputs may be identified using a combination of wavelengths.

The subsea environment can be hazardous, and cable breaks and other failures of the data network should be expected. It is therefore important to build a degree of redundancy into the system. This is especially important where a signalling system does not use a keep-alive signal to maintain electrical power. However, it is also important where the signalling system uses a keep-alive signal to maintain electrical power in order to minimize the occurrence of unexpected shutdowns, which would lead to a loss in productivity.

In an embodiment that is compatible with any of the embodiments described above, a further data cable is used that sends the same signals as the first data cable. It may follow a different path to the first data cable to reduce the risk of both data cables being damaged. The subsea node therefore receives identical signals from two data cables. In the embodiment that uses keep alive signalling, the subsea node will maintain electrical power if it receives a keep alive signal from just one of the data cables. This ensures that a failure of one of the data cables does not lead to an unexpected shutdown of the subsea node, which would lead to an unwanted loss of production.

Similarly, in the embodiment in which a message payload includes an instruction to shut off power, the subsea node would shut off power in the event that it receives such as instruction from just one of the data cables. Note also that a message payload may include additional instructions that are not related to the power supply (such as opening and closing valves and so on)

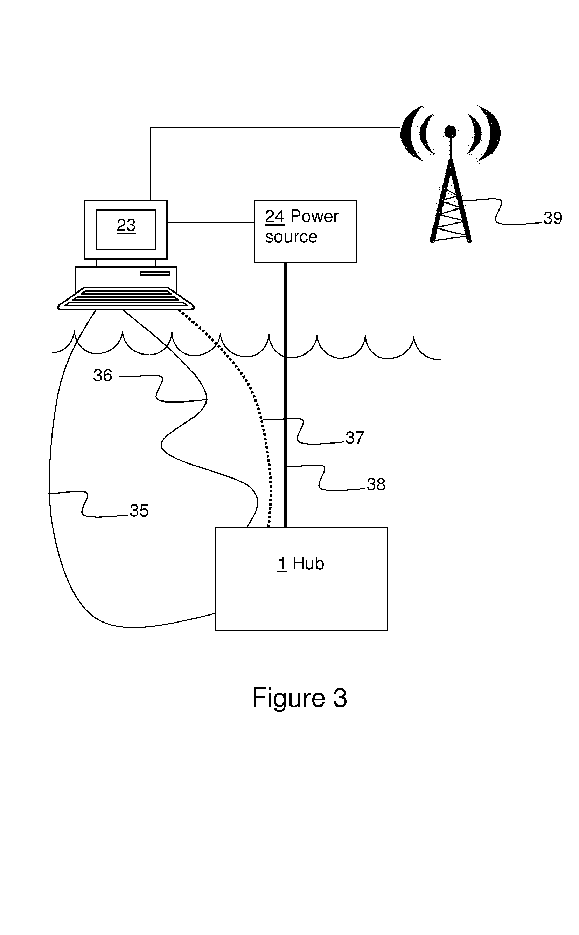

Note that further redundancy or alternative redundancy signalling may be provided. For example, signals could be sent from the controller computer 23 and carried over different media. Referring to Figure 3, herein, a signal may be sent using a first FO cable 35, and redundancy may be provided as described above using any of a second FO cable 36, an electrical cable 37, piggybacking a signal onto the power cable 38 that provides the power to the subsea node 1, or even, in shallow waters, using a radio transmitter 39.

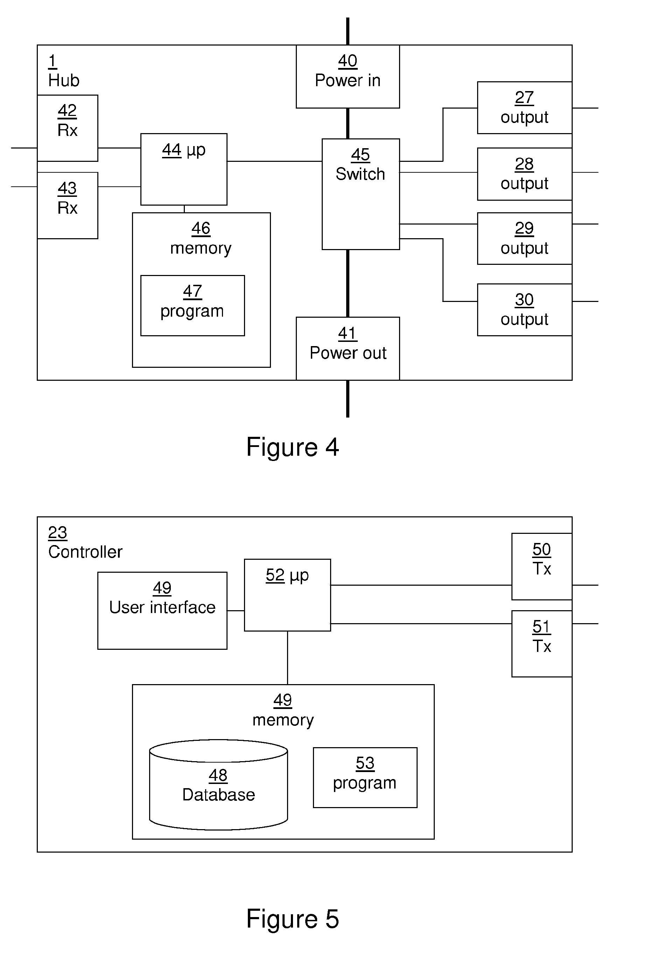

Figure 4 illustrates a subsea node such as a hub 1. The hub 1 is provided with a connector 40 for receiving power and a further connector 41 for power out. The hub 1 is also provided with a receiver 42 for receiving signals sent from the controller 23. As described above, it may also be provided with a second receiver 43 for receiving redundancy signals in the event that the signals received at the first receiver 42 are interrupted. The signals are interpreted by a processor 44 that in turn controls a switch 45 that can switch power for the whole hub 1 or for individual power outputs 27, 28, 29, 30 a the hub 1. As described above, the switch may be activated by the reception (or lack of reception) of keep-alive signals, or may be activated by specific instructions contained in a signal.

The hub 1 may also be provided with a non-transitory computer readable medium in the form of a memory 46. This is used to store a computer program 47 which, when executed by the processor 44, causes the hub 1 to behave as described above.

Note also that the memory 46 may be use to store other information such as the identifier associated with the hub 1 or any of its outputs 27, 28, 29, 30. In certain embodiments where the signal includes payload data, the data stored in the memory may be modified. This allows the controller 23 to, for example, provide updates to the computer program 47, or to inform the hub 1 of any changes to the identifiers.

Figure 5 illustrates a controller 23 in the form of a computer device. The controller 23 is provided with a database 48 to store the identifiers associated with each subsea node or output. This is stored on a non-transitory computer readable medium in the form of a memory 49. Note that the memory may be located at the controller 23 (as illustrated) or may be located remotely from the controller 23.

A user interface 49 is also provided that allows an operator to interact with the controller 23 to, for example, instruct a certain subsea node 1 or output to switch off (or switch on) power.

A transmitter 50 is provided for sending a signal (this is done periodically in the embodiment described above that uses a keep-alive signal) that uses the identifier to identify a subsea node or an output. As described above, a second transmitter 51 may also be provided to allow the signal to be sent using a different carrier medium, in order to provide a degree of redundancy in the event that the signal sent by the transmitter 50 is not received.

A processor 52 is provided for controlling the operation of the controller 23. The processor 52 may also connect to other interfaces, such as pressure and temperature monitors, to automatically send a signal (or cease sending a keep-alive signal) in the event that an emergency is detected.

The memory 53 may also be used to store a computer program 53 which, when executed by the processor 52, causes the controller 23 to operate as described above.

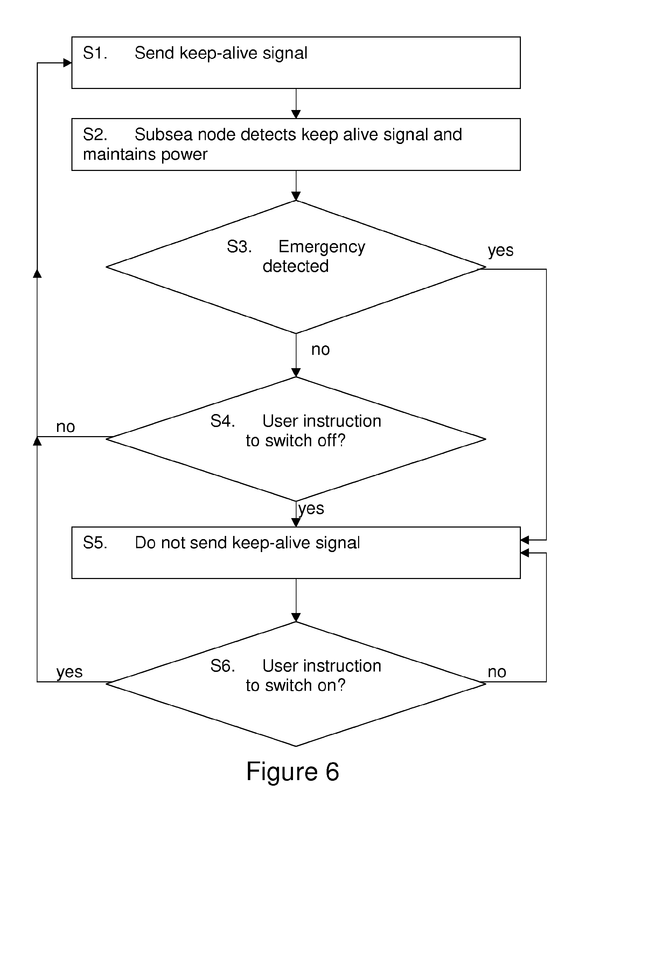

Figure 6 is a flow diagram illustrating the embodiment in which the controller 23 sends a keep-alive signal. The following numbering corresponds to that of Figure 6:
S1. The controller 23 sends a keep-alive signal to the subsea node 1. Note that this may be periodically, or in the embodiment in which a signal at a specific wavelength is detected, continuously.
S2. The subsea node 1 has electric power switched on and maintains this state.
S3. If no emergency situation is detected that would require power to be shut down, the keep-alive signal can be maintained and the procedure continues at step S4. If an emergency situation is detected, then power should be switched off and the procedure continues at step S5.
S4. If no user instruction is received to switch off power, then the keep-alive signal can be maintained and the procedure reverts to step S1. Otherwise power must be switched off and the procedure continues at step S5.
S5. No more keep-alive signals are sent.
S6. If an instruction is received from the user to switch power back on, then keep-alive signals can be resumed and the procedure reverts to step S1. Otherwise the procedure reverts to step S5.

It will be appreciated by a person of skill in the art that various modifications may be made to the above described embodiment without departing from the scope of the present disclosure. Different embodiments have been described above, but the skilled person will readily be able to devise other options for signalling that uniquely identifies a subsea node and instructs the node whether to maintain or turn off electrical power.

The following abbreviations have been used in the above description:
- DC: Direct Current
- FO: Fibre Optic
- HVDC: High Voltage Direct Current
- IP: Internet Protocol
- LAN: Local Area Network
- LVDC: Low Voltage Direct Current

## Claims

1. A system comprising:
a power supply;
a controller; and
a subsea node being identifiable by an identifier, wherein the controller is configured to transmit a command signal to switch power at the subsea node using the identifier corresponding to said subsea node.

2. The system according to claim 1, further comprising:
a plurality of subsea nodes, each node of the plurality of subsea nodes being identifiable by a unique identifier;
a power network providing power from the power supply to each node of the plurality of subsea nodes;
a communications network connecting each subsea node to a controller;
wherein each subsea node is provided with a switching mechanism arranged to switch power at the node, the switching mechanism being controllable by a signal sent from the controller in order to remotely switch power at the node.

3. The system according to claim 2, where the power supply and the controller are located at a surface location.

4. The system according to any one of claims 1, 2 or 3, wherein the controller is configured to send the signal to the subsea node by any of a fibre optic cable, an electrical cable, power line communications and a radio signal.

5. The system according to any one of claims 1 to 4, wherein at least one of the subsea nodes has a plurality of switchable power outputs, each switchable power output being associated with a unique output identifier.

6. The system according to any one of claims 1 to 5, configured to send the signal by a fibre optic cable and also by a further carrier medium, the further carrier medium comprising any of a further fibre optic cable, an electrical cable, power line communications and a radio signal.

7. The system according to claim 6, wherein the subsea node is arranged to take action on the basis of the signal received from either of the fibre optic cable and/or the further carrier medium.

8. The system according to any one of claims 1 to 7, configured to repeat the signal periodically and the subsea node is arranged to switch power at the subsea node in response to an absence of the signal for a predetermined time period.

9. The system according to any one of claims 1 to 7, wherein the signal comprises a header portion comprising at least the identifier associated with the subsea node and a payload portion comprising at least an instruction relating to switching the supply of power at the subsea node.

10. The system according to any one of claims 1 to 7, configured to send the signal from the controller to the subsea node by a fibre optic cable, and the unique identifier relates to a signalling wavelength, the system being further configured for, at the subsea node, maintaining electrical power in the event that the subsea node detects signalling at the signalling wavelength, and switching off electrical power in the event that the subsea node does not detect signalling at the signalling wavelength.

11. A subsea node comprising:
a power input for receiving electrical power;
a switch for switching electrical power on or off;
a receiver for receiving a signal, the signal identifying the subsea node;
a processor for activating the switch on the basis of the received signal.

12. The subsea node according to claim 11, wherein the receiver is arranged to receive a signal sent using any of a fibre optic cable, an electrical cable, power line communications and a radio signal.

13. The subsea node according to any one of claims 11 or 12, further comprising a plurality of power outputs, each power output having a corresponding power switch, each power output being associated with a unique identifier.

14. The subsea node according to any one of claims 11, 12 or 13, further comprising a further receiver, the further receiver arranged to receive a signal sent over a further carrier medium, the further carrier medium being selected from any of a further fibre optic cable, an electrical cable, power line communications and a radio signal.

15. The subsea node according to claim 14, wherein the subsea node is arranged to take action on the basis of the signal received from of the receiver and/or the further receiver.

16. The subsea node according to any one of claims 11 to 15, wherein the processor is arranged to maintain power at the subsea node and to switch off the power if the signal has not been received for a predetermined time period.

17. The subsea node according to any one of claims 11 to 16, wherein the receiver is arranged to receive a signal comprising a header portion comprising at least the identifier associated with the subsea node and a payload portion comprising at least an instruction relating to switching the power supply at the subsea node.

18. The subsea node according to any one of claims 11 to 16, wherein the receiver is arranged to receive a signal carried by an optical fibre at a signalling wavelength associated with the subsea node, the signalling wavelength identifying the subsea node, and the processor is arranged to maintain electrical power in the event that the subsea node detects signalling at the signalling wavelength, and switch off electrical power in the event that the subsea node does not detect signalling at the signalling wavelength.

19. A subsea node configured for:
receiving power from a power supply;
receiving a command signal from a controller comprising an identifier corresponding to said subsea node, and
switching power on the basis of said identifier.

20. A computer device for controlling electrical power at a subsea node, the computer device comprising:
a database comprising a plurality of identifiers, each identifier of the plurality of identifiers being associated with a respective subsea node;
an interface for allowing an operator to specify a subsea node and a switching operation for the subsea node; and
a transmitter for sending a signal, the signal identifying the subsea node and including an instruction instructing the subsea node on maintaining or switching a power supply at the subsea node.

21. The computer device according to claim 20, the computer device further comprising a processor for automatically sending the signal without requiring intervention from the operator.

22. The computer device according to claim 20 or 21, wherein the database further comprises a plurality of unique identifiers, each corresponding to output at a subsea node.

23. The computer device according to any one of claims 20 to 22, wherein the transmitter is arranged to send the signal using any of a fibre optic cable, an electrical cable, power line communications and a radio signal.

24. The computer device according to any one of claims 20 to 23, further comprising a further transmitter, the further transmitter being arranged to send the signal by a further carrier medium, the further carrier medium comprising any of a further fibre optic cable, an electrical cable, power line communications and a radio signal.

25. The computer device according to any one of claims 20 to 24, wherein the transmitter is arranged to send the signal periodically such that the subsea node maintains electrical power or stop sending said signal for predetermined period of time such that the subsea node switches off.

26. The computer device according to any one of claims 20 to 25, wherein the transmitter is arranged to send a signal comprising a header portion comprising at least the identifier associated with the subsea node and a payload portion comprising at least an instruction relating to switching the power supply at the subsea node.

27. The computer device according to any one of claims 20 to 24, wherein each identifier is associated with a wavelength, the transmitter being arranged to send a signal at that wavelength over a fibre optic cable.
